# EUROPEAN PATENT SPECIFICATION

(11) **EP 0 492 954 B1**
(45) Date of publication and mention of the grant of the patent: **30.10.1996**
(21) Application number: 91311738.8
(22) Date of filing: 18.12.1991
(51) Int. Cl.: G06K 19/08, G06K 19/16

(54) **Bar code system using segments having different reflective directivities**
Strichkodesystem mit Segmenten von verschiedenen Reflexionsrichtcharakteristiken
Système de code à barres utilisant des segments pourvus de directivités de réflexion différentes

(30) Priority: 22.12.1990 JP 413373/90
(43) Date of publication of application: 01.07.1992
(73) Proprietor: NHK SPRING CO.LTD., Yokohama-shi, Kanagawa-ken (JP)
(72) Inventor: Seki, Yoshiaki, c/o NHK Spring Co., Ltd., Mishima-shi Shizuoka-ken (JP); Hosino, Hidekazu, c/o NHK Spring Co., Ltd., Yokohama-shi, Kangawa-ken (JP)
(74) Representative: Browne, Robin Forsythe, Dr.

(56) References cited:
- EP-A- 0 075 674
- EP-A- 0 360 970
- EP-A- 0 412 316
- DE-A- 2 659 639
- US-A- 4 625 101

## Description

### TECHNICAL FIELD

The present invention relates to a bar code system using segments having different reflective directivities so that the amount of data that can be stored may be increased. The present invention is particularly suitable for use as means for identifying the authenticity of magnetic cards and other information storage cards. It should be noted that the term "bar code system" used herein is meant as a geometrical combination of a plurality of segments which can be optically read to convey information, and the known bar code systems consisting of a plurality of code bars (such as those known under the names of Universal Product Code, European Article Number and Japanese Article Number widely used to mark consumer goods and other merchandises) should be considered as a typical example of the "bar code system".

### BACKGROUND OF THE INVENTION

Conventionally, the bar code representing prescribed data with a combination of light reflecting bars and non-reflecting bars have been widely used in various fields. Typically, each symbol is represented by a numeral selected from 0 to 9 by combining a plurality of such bars, and prescribed data is formed by several of such symbols. Also, depending on the object on which the bar code is to be affixed, the overall size of the bar code may be enlarged or shrunk as desired within a prescribed range.

In such a recording medium, it is desired to increase the amount of data that can be stored as much as possible. To achieve this goal, it is conceivable to make the bars finer or denser, and increase the number of the bars.

However, there is a limit to the density of the bars because of the limit in the optical resolution power of the reader, and the number of bars may not be increased to a desired extent because of the limited size of the object on which the bar code is to be affixed.

In recent years, as the demand for magnetic cards and other information storage cards grows, it is becoming increasingly more important to provide effective measures for preventing forgery of magnetic and other information storage cards. For instance, it has been attempted to use a multilayered magnetic region, and to additionally affix or print bar codes on the card. For magnetic cards not intended for repeated use, it has been practised to punch holes in the magnetic stripe when spent.

Providing a bar code on the surface of a card can be carried out with a relative ease because of the simplicity of the structure. Therefore, there is a problem that its structure can be relatively easily analyzed by potential forgers, and can be duplicated with relatively inexpensive equipment. Further, it has been practically impossible to prevent attempts to make identical copies without analyzing its structure.

EP-A-0360970 discloses a bar code which can be scanned in at least two directions forming an angle with each other, and in which the bar code elements and component surfaces of an image field comprise diffraction elements.

US-A-4625101 discloses a bar code configuration for moulding in the side wall of a tyre in which the bar code configuration consists of even surface portions separated by uneven surface portions which have sloped faces.

EP-A-0075694 discloses an optical marking system for documents in which a document is marked by means of a light diffracting phase structure consisting of saw tooth furrows and through which a light beam is transmitted.

### BRIEF SUMMARY OF THE INVENTION

In view of such problems of the prior art, a primary object of the present invention is to provide a bar code system which combines a geometrical arrangement of a plurality of segments with a pattern of light reflected from the bar code system as means for encoding data and thereby increasing the amount of data that can be stored.

A second object of the present invention is to provide a bar code system which can effectively discourage forgers from making unauthorised duplication of the bar code system.

A third object of the present invention is to provide a bar code system which can be conveniently printed on or otherwise affixed to an information storage medium so as to prevent unauthorised duplication of the information storage medium.

A fourth object of the present invention is to provide a reader and a method for reading information from such a bar code system.

According to the present invention there is provided a bar code system for representing prescribed data by means of a geometrical arrangement of a plurality of segments, characterised in that the segments are assigned a selected combination of different reflective directivities, the combination representing additional data. This combination allows the amount of data that can be stored to be increased and discourages any attempt to make an unauthorised duplication of the bar code system.

Such a reflective directivity can be produced with such means as diffraction grating, hologram and a multiplicity of parallel grooves.

The present invention further provides an optical reader for reading such a bar code system, comprising: a light emitting device for projecting an incident light beam upon the bar code system; a light receiving device carried by a optical head common to the light emitting device, and having a plurality of light receiving areas each capable of individually detecting light reflected from a point of the bar code system upon which the incident light is impinged; means for scanning the optical head over an entire prescribed area of the bar code system; and determination circuit for receiving detection signals from the light receiving areas to read data from a geometrical arrangement of the segments and a pattern of light received by the light receiving areas according to the reflective directivities given to the segments of the bar code system.

Also provided is a method for reading such a bar code system, comprising the steps of: projecting an incident light beam upon the bar code system and scanning the light beam over an entire prescribed area of the bar code system in a sequential manner; detecting a pattern of light reflected by a point of the bar code system upon which the incident light beam is impinged; and analyzing results obtained from the detecting step and reading data from a geometrical arrangement of the segments and a pattern of light resulting from the reflective directivities given to the segments of the bar code system.

Thus, by assigning a specific reflective directivity to at least part of the segments of the bar code system, it is possible to store a greater amount of data by treating the reflective directivity of each of the segments as additional means for encoding data. Analysis of the reflective directivity is significantly more difficult than that of the bar code system based strictly on the geometrical arrangement of a plurality of segments, and, hence, the forgery of the bar code system is made accordingly more difficult.

This bar code system may be used as means for preventing forgery or tampering of information storage cards such as magnetic cards and IC cards.

### BRIEF DESCRIPTION OF THE DRAWINGS

Now the present invention is described in the following with reference to the appended drawings, in which:
Figure 1 is a schematic perspective view of the magnetic card and the internal structure of the card reader/writer according to the first embodiment of the present invention;
Figure 2 is an enlarged plan view of the bar code area of the magnetic card illustrated in Figure 1;
Figure 3 is a bottom end view of the light emitting device and the light receiving device taken along line III-III of Figure 1;
Figure 4 is a view similar to Figure 2 showing a second embodiment of the present invention;
Figure 5 is a view similar to Figure 3 showing a second embodiment of the present invention;
Figure 6 is a view similar to Figure 2 showing a third embodiment of the present invention;
Figure 7 is a view similar to Figure 3 showing a third embodiment of the present invention;
Figure 8 is a view similar to Figure 2 showing a fourth embodiment of the present invention;
Figure 9 is a view similar to Figure 3 showing a fourth embodiment of the present invention; and
Figure 10 is a view similar to Figure 3 showing a modification of the first through fourth embodiments of the present invention.

### DETAILED DESCRIPTION OF THE PREFERRED EMBODIMENTS

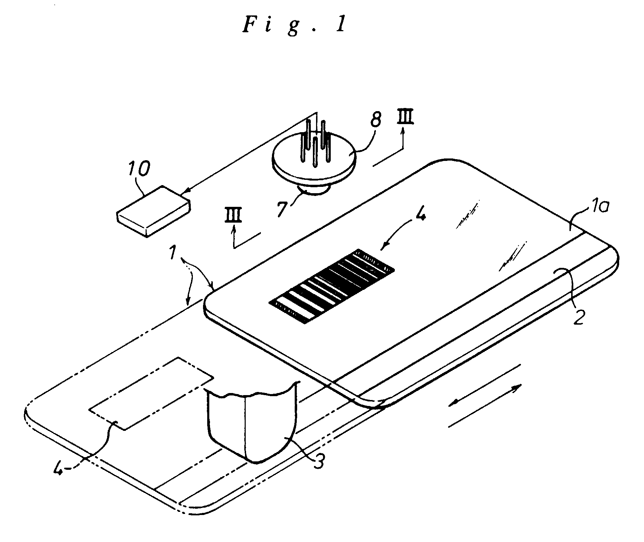

Figure 1 is a perspective view schematically illustrating an essential structure of a magnetic card 1 and a card reader/writer according to a first embodiment of the present invention.

The card 1 is conveyed in the direction indicated by the arrows in Figure 1 by means of conveying rollers or the like not shown in the drawing, and reading/writing of data into and from a magnetic stripe 2 provided on a major surface 1a of the card 1 takes place as the magnetic stripe of the card 1 is moved along a magnetic head 3.

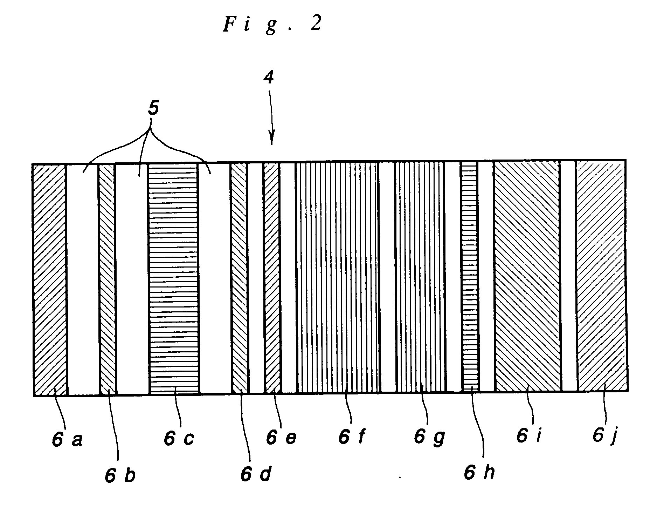

Meanwhile, a bar code area 4 is provided near a corner of the major surface la of the card 1. This bar code area 4 consists of an alternating combination of a plurality of bars 5 each wholly reflecting the incident light and a plurality of bars 6a through 6j each consisting of diffraction grating formed by hundreds or thousands of grooves or lines per mm, the pitch of the grooves or lines being dependent on the wavelength of the light that is going to be used. As shown in greater detail in Figure 2, the grooves or lines of the diffraction grating extend from upper left to lower right in the bars 6b, 6d and 6i, from upper right to lower left in the bars 6a, 6e and 6j, laterally in the bars 6c and 6h, and vertically in the bars 6f and 6g.

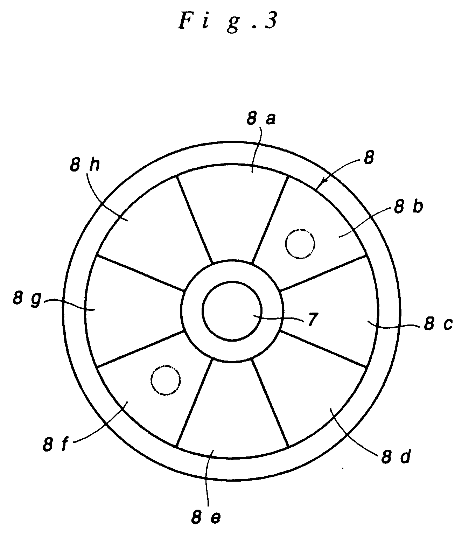

The card reader/writer is provided with a laser light emitting device 7 serving as light projecting means directly facing the bar code area 4 of the major surface la at a certain distance when the card 1 is at the position indicated by the solid lines in Figure 1. This light emitting device 7 incorporates a lens not shown in the drawing for converting the projected light into a parallel beam. Referring to Figure 3, the light emitting device 7 is surrounded by a light receiving device 8 consisting of a multi-section photo diode divided into a plurality of light receiving sectors 8a through 8h. This light receiving device 8 is connected to an identification circuit 10 for identifying the authenticity of the card 1 by reading the data recorded in the bar code area 4 and analysing it.

In actually carrying out the process of identifying the card 1, an illuminating light is projected from the light emitting device 7 upon the bar code area 4 when the card 1 passes through a position where the card 1 inserted in the card reader/writer opposes the light emitting device 7. As a result, part of the light reflected by the bar code area 4, for instance a first-order diffracted light (which may be simply referred to as reflected light in this specification) is received by the light receiving sectors 8a through 8h of the light receiving device 8 as light spots as illustrated in Figure 3.

Table 1 shows the pattern of the light received by the light receiving sectors 8a through 8h depending on the direction of the diffraction grating in the bars 6a through 6j. In other words, when the illuminating light from the light emitting device 7 is projected upon the bars 6a through 6j illustrated in Figures 2 in a sequential manner, the light reflected, for instance, by the bar 6a is received by the light receiving sectors 8b and 8f located in a mutually diagonally opposed positions of the light receiving device 8, and the light reflected by the bar 6b is received by the light receiving sectors 8d and 8h located in a mutually diagonally opposed positions. Obviously, when the illuminating light is projected upon any one of the totally reflecting bars 5 located between the neighboring pairs of the bars 6a through 6j, all of the light receiving sectors 8a through 8h receive the reflected light.

**Table 1**

| | 6a | 6b | 6c | 6d | 6e | 6f | 6g | 6h | 6i | 6j |
|---|---|---|---|---|---|---|---|---|---|---|
| 8a | | | | | | x | x | | | |
| 8b | x | | | | x | | | | | x |
| 8c | | | x | | | | | x | | |
| 8d | | x | | x | | | | | x | |
| 8e | | | | | | x | x | | | |
| 8f | x | | | | x | | | | | x |
| 8g | | | x | | | | | x | | |
| 8h | | x | | x | | | | | x | |

Data is read out from the light receiving sectors 8a through 8h and analyzed according to the pattern of the received light by the identification circuit 10, and it is determined if the card 1 is authentic or not according to predetermined criteria.

Therefore, when all of the light receiving sectors 8a through 8h were commonly connected so that no distinction may be made as to which of the sectors received reflected light, the received data would be as represented by a conventional bar code. However, different data can be obtained when the patterns received by the light receiving sectors 8b and 8f are considered or when distinction is made as to which of the sectors received reflected light. For instance, by assigning different symbols for different combinations of light receiving sectors which actually received light or different symbols for different sequences of receiving light by the light receiving sectors, it is possible to add a number of symbols to the data in addition to the data expressed by the conventional bar code. It can be accomplished, for instance, by assigning the symbol "a" when only the light receiving sector 8a received light, and assigning "b" when the light receiving sectors 8a, 8c and 8b received light in this order.

The bars 5 were totally reflecting bars in the present embodiment, but if they are bars not reflecting any light one can obtain the data as being expressed by the conventional bar code by commonly connecting all of the light receiving sectors 8a through 8h.

When such a structure is employed, since the analysis of the pattern of the diffraction grating in each bar of the bar code area is difficult and the fabrication of an identical bar code area requires a significant cost even when such a card is obtained by a potential forger with a fraudulent intent, a very strong discouraging effect is produced.

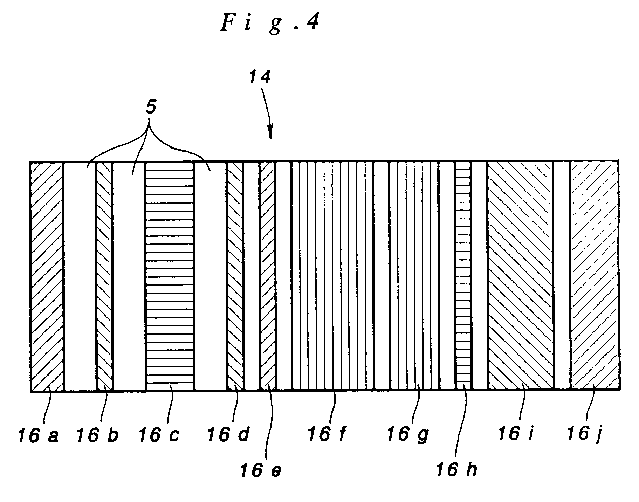

Figure 4 is a view similar to Figure 2 showing a second embodiment of the present invention, and like parts to those in the first embodiment are denoted with like numerals without repeating the description thereof.

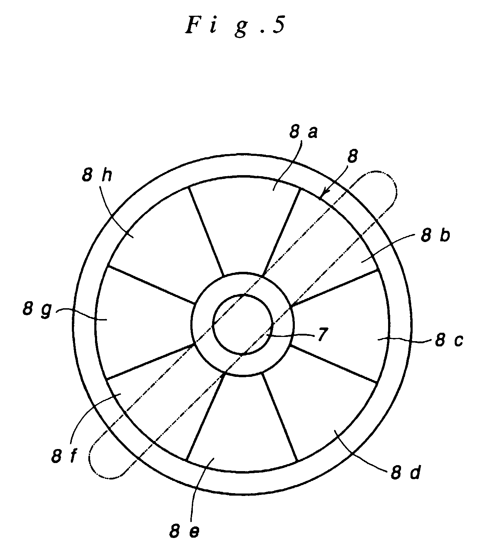

The bars 5 in the bar code area 14 of this embodiment are similar to those in the first embodiment, but each of the bars 16a through 16j consists of a multiplicity of parallel V-grooves at the pitch of several to tens of grooves per mm instead of diffraction grating. The directions in which the V-grooves of the bars 16a through 16j extend are similar to those of the first embodiment. Therefore, light is received by a diagonally opposing pair of the light receiving sectors 8a through 8j as an elliptic light spot elongated in the direction perpendicular to the direction of the grooves of the bars 16a through 16j as illustrated in Figure 5, and data is read and analysed by the identification circuit 10 according to the pattern of the received light so that the authenticity of the card 1 may be determined.

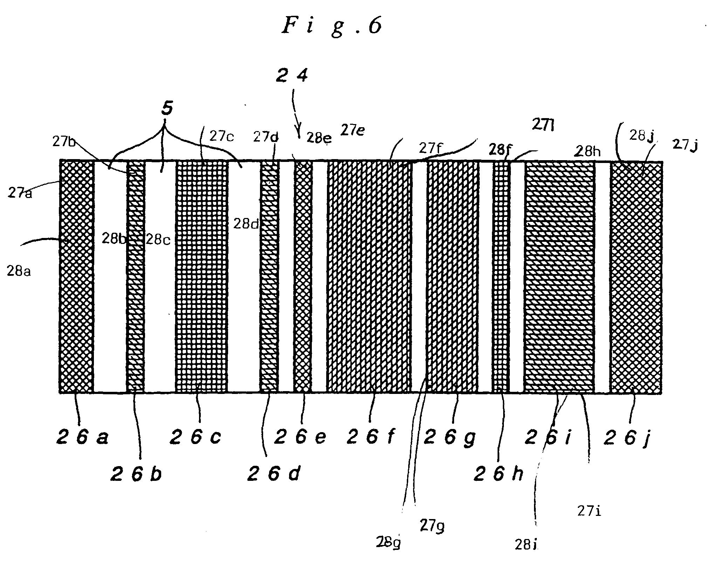

Figure 6 is a view similar to Figure 2 showing a third embodiment of the present invention. In this embodiment, the bars 5 in the bar code area 24 are similar to those of the first embodiment, but each of the bars 26a through 26j consists of a combination of a respective first diffraction grating 27a through 27j with its lines extending in a first direction and a respective second diffraction grating 28a through 28j with its lines extending in a direction which forms 45 or 90 degrees to the aforementioned direction. In this embodiment, these two diffractions gratings are superimposed one over the other, but it is possible to divide each of the code bars into a plurality of parts so that different parts within the single code bar may have different diffraction gratings.

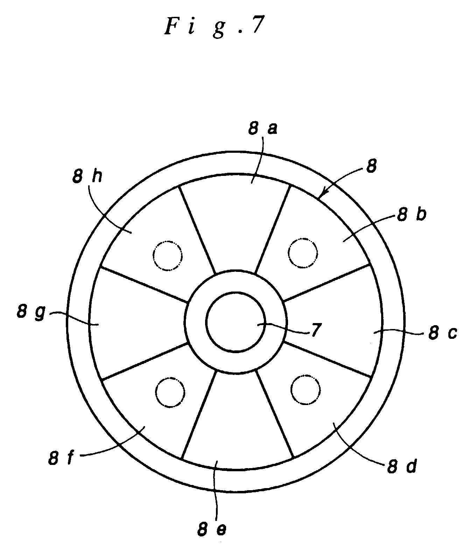

Therefore, as illustrated in Figure 7, the light projected upon the bar code area 24 is reflected into two different directions for each of the bars 26a through 26j, and the light is received as four light spots impinged upon the corresponding ones of the light receiving sectors 8a through 8h of the light receiving device 8.

In other words, when the illuminating light beam is projected from the light emitting device 7 upon the bars 26a through 26j illustrated in Figure 6 in a sequential manner, the light reflected, for instance, by the bar 26a is received by the light receiving sectors 8b, 8d, 8e and 8h, and the light reflected by the bar 26b is received by the light receiving sectors 8a, 8d, 8e and 8h. This embodiment is otherwise similar to the first embodiment. Obviously, the diffraction grating of the bars 26a through 26j may be substituted with a multiplicity of parallel V-grooves at the pitch of several to tens of grooves per mm to obtain similar results.

According to this embodiment, it is possible to store data of a several times larger amount than the first or second embodiment consisting of a combination of light receiving sectors for simultaneously receiving light, and provides a stronger discouraging effect on potential forgers by making the analysis of the diffraction grating or the groove pattern of each of the bars in the bar code area even more difficult.

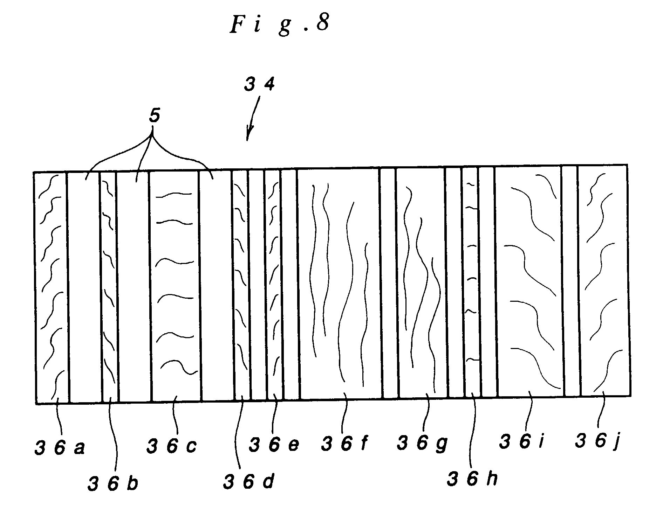

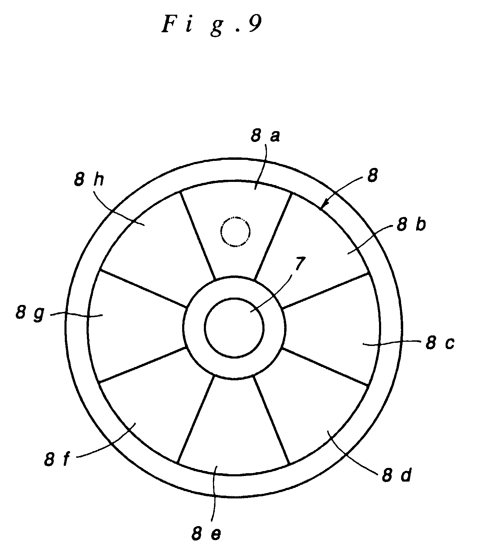

Figure 8 is a view similar to Figure 2 showing a fourth embodiment of the present invention. In this embodiment, the bars 5 in the bar code area 34 are similar to those of the first embodiment, but each of the bars 36a through 36j consists of hologram having a specific reflective directivity instead of diffraction grating. The directions of reflecting the illuminating light by the hologram of these bars 36a through 36j are the same as those of the first embodiment. Therefore, the light reflected by each of the bars 36a through 36j is received by one or more of the light receiving sectors 8a through 8h according to the reflective directivity of the corresponding bar as illustrated in Figure 9, and data is read from the pattern of the received light and analyzed by the identification circuit 10 so as to determine the authenticity of the card 1. Otherwise, the structure of this embodiment is similar to that of the first embodiment.

This embodiment allows an even larger amount of data to be stored in the bar code area than the first embodiment according to the combination of the light receiving sectors receiving the light at the same time.

Obviously, this invention is not limited to the embodiments described above. For instance, it is possible to store extremely large amounts of data in the bar code area by combining diffraction grating of various line pitches, V or U-grooves, and hologram, and increase the effectiveness of the structure in discouraging the forgery of the card.

The reflective direction of each bar was selected from four or eight different directions in the above embodiments, but the number of possible directions may be increased insofar as can be detected. Obviously, the light receiving device must be divided finer according to the number of possible directions of reflection.

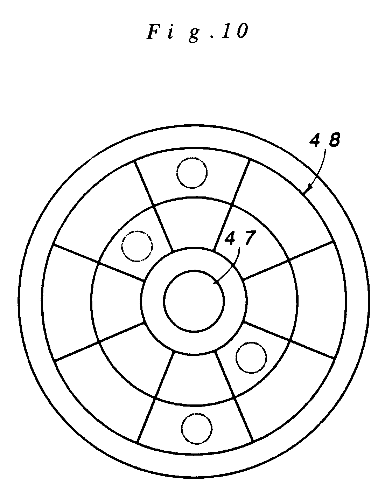

Also, the light receiving sectors of the light receiving device may be arranged so as to surround the light emitting device 47 by a plurality of concentric circles as illustrated in Figure 10 according to the reflective directivity of the diffraction or the hologram of each of the bars in the bar code area.

In the above described embodiments, the illuminating light was projected from the light emitting device upon the area of diffraction grating or the like via a lens, but it is possible to change the direction of the light by placing mirrors and prisms in the path of the light. The light receiving device may also be a positioning sensing device (PSD) or the like as well as a multi-sector photodiode.

In the above described embodiments, the bar code area was provided on the major surface of the card, but it may also be provided on the reverse surface of the card or may be a transparent part of the card through which the illuminating light may be passed.

As described above, according to the bar code system of the present invention, since a specific reflective direction is assigned to each of the bars or to each of the symbols consisting of a plurality of bars, by including the reflective direction assigned to each of the bars or the symbols as a part of the data, it is possible to store a far larger amount of data in the bar code system as compared to the data stored in the conventional bar code system. Since the analysis of the reflective directivity for each of the bars or the symbols and, hence, the unauthorised duplication of the card are made extremely difficult, the identification of the object on which the bar code is affixed can be made highly reliable. Thus, the present invention offers a substantial advantage.

## Claims

1. A bar code system (4, 14, 24, 34) for representing prescribed data by means of a geometrical arrangement of a plurality of segments (5, 6, 16, 26, 36), characterised in that the segments are assigned a selected combination of different reflective directivities, the combination representing additional data.

2. A bar code system according to claim 1, wherein said segments consist of per se known code bars.

3. A bar code system according to claim 2, wherein the code bar (6a - 6j, 26a - 26j) having a prescribed reflective directivity consists of a region of diffraction grating.

4. A bar code system according to claim 2, wherein the code bar (16a - 16j) having a prescribed reflective directivity consists of a region of a multiplicity of parallel grooves.

5. A bar code system according to claim 2, wherein the code bar (36a - 36j) having a prescribed reflective directivity consists of a region of hologram.

6. A bar code system according to claim 2, wherein at least one of said segments (26a - 26j) reflects incident light into a plurality of directions.

7. A bar code system according to claim 1, wherein said bar code system (4, 14, 24, 34) is printed on or otherwise affixed to an information carrying medium (11), and is utilised as means for identifying the authenticity of said information carrying medium (1).

8. An optical reader for reading a bar code system according to any one of the preceding claims, comprising,
a light emitting device (7) for projecting an incident light beam upon said bar code system (4, 14, 24, 34);
a light receiving device (8) carried by an optical head common to said light emitting device (7), and having a plurality of light receiving areas (8a - 8h) each capable of individually detecting light reflected from a point of said bar code system (4, 14, 24, 34) upon which said incident light is impinged;
means for scanning said optical head over an entire prescribed area of said bar code system; and
determination circuit (10) for receiving detection signals from said light receiving areas (8a - 8h) to read data from a geometrical arrangement of said segments and a pattern of light received by said light receiving areas according to said reflective directivities given to said segments of said bar code system.

9. A method for reading a bar code system according to any one of claims 1 through 7, comprising the steps of:
projecting an incident light beam upon said bar code system (4, 14, 24, 34) and scanning said light beam over an entire prescribed area of said bar code system in a sequential manner;
detecting a pattern of light reflected by a point of said bar code system upon which said incident light beam is impinged; and
analysing results obtained from said detecting step and reading data from a geometrical arrangement of said segments and a pattern of light resulting from said reflective directivities given to said segments of said bar code system.

## Patentansprüche

1. Strichkodesystem (4, 14, 24, 34) für die Darstellung vorgegebener Daten mittels einer geometrischen Anordnung einer Mehrzahl von Segmenten (5, 6; 16, 26; 36), dadurch gekennzeichnet, daß den Segmenten eine ausgewählte Kombination von unterschiedlichen Reflexionsrichtcharakteristiken zugeordnet ist, wobei die Kombination zusätzliche Daten darstellt.

2. Strichkodesystem nach Anspruch 1, bei welchem die Segmente aus an sich bekannten Kodestrichen bestehen.

3. Strichkodesystem nach Anspruch 2, bei welchem der Kodestrich (6a bis 6j, 26a bis 26j), welcher eine vorgegebene Reflexionsrichtcharakteristik aufweist, aus einem Bereich eines Beugungsgitters besteht.

4. Strichkodesystem nach Anspruch 2, bei welchem der Kodestrich (16a bis 16j), welcher eine vorgegebene Reflexionsrichtcharakteristik aufweist, aus einem Bereich mit einer Vielzahl paralleler Rillen besteht.

5. Strichkodesystem nach Anspruch 2, bei welchem der Kodestrich (36a bis 36j), welcher eine vorgegebene Reflexionsrichtcharakteristik aufweist, aus einem Bereich eines Hologramms besteht.

6. Strichkodesystem nach Anspruch 2, bei welchem mindestens eines der Segmente (26a bis 26j) einfallendes Licht in einer Vielzahl von Richtungen reflektiert.

7. Strichkodesystem nach Anspruch 1, bei welchem das Strichkodesystem (4; 14; 24; 34) auf einen Informationsträger (1) gedruckt oder auf andere Weise an diesem angebracht ist und als Mittel zum Identifizieren der Echtheit des Informationsträgers (1) verwendet wird.

8. Optisches Lesegerät zum Lesen eines Strichkodesystems nach einem der vorhergehenden Ansprüche, mit:
einer Licht aussendenden Vorrichtung (7) zum Projizieren eines einfallenden Lichtstrahls auf das Strichkodesystem (4; 14; 24; 34);
einer Licht empfangenden Vorrichtung (8), welche von einem optischen Kopf, den sie mit der Licht aussendenden Vorrichtung (7) gemein hat, gehalten wird und welche eine Mehrzahl von Licht empfangenden Zonen (8a bis 8h) aufweist, die jeweils einzeln Licht erfassen können, welches von einem Punkt des Strichkodesystems (4; 14; 24; 34), auf dem das einfallende Licht auftrifft, reflektiert wird;
Mitteln, welche eine Abtastbewegung des optischen Kopfes über eine gesamte vorgegebene Zone des Strichkodesystems bewirken;
einem Analyse-Schaltkreis (10), der Erfassungssignale von den Licht empfangenden Zonen (8a bis 8h) empfängt und Daten aus einer geometrischen Anordnung der Segmente und aus einem Lichtmuster, welches von den Licht empfangenden Zonen entsprechend den Reflexionsrichtcharakteristiken empfangen wird, welche den Abschnitten des Strichkodesystems zugeordnet sind, liest.

9. Verfahren zum Lesen eines Strichkodesystems nach einem der Ansprüche 1 bis 7, welches folgende Schritte aufweist:
Projizieren eines einfallenden Lichtstrahls auf das Strichkodesystem (4; 14; 24; 34) und sequentielles Abtasten einer gesamten vorgegebenen Fläche des Strichkodesystems mit dem Lichtstrahl;
Erfassen eines Lichtmusters, welches von einem Punkt des Strichkodesystems, auf dem der einfallende Lichtstrahl auftrifft, reflektiert wird; und
Analysieren der Ergebnisse, welche beim Erfassungschritt erhalten wurden und Auslesen der Daten aus einer geometrischen Anordnung der Segmente und aus einem Lichtmuster, welches sich aus den den Segmenten des Strichkodesystems zugeordneten Reflexionrichtcharakteristiken ergibt.

## Revendications

1. Système de code à barres (4, 14, 24, 34) pour représenter des données prescrites au moyen d'une disposition géométrique d'une pluralité de segments (5, 6, 16, 26, 36), caractérisé en ce que les segments sont dotés d'une combinaison sélectionnée de différentes directivités de réflexion, la combinaison représentant des données supplémentaires.

2. Système de code à barres selon la revendication 1, dans lequel lesdits segments constituent des barres de code connues en soi.

3. Système de code à barres selon la revendication 2, dans lequel la barre de code (6a - 6j, 26a - 26j) ayant une directivité de réflexion prescrite comprend une région d'un réseau de diffraction.

4. Système de code à barres selon la revendication 2, dans lequel la barre de code (16a - 16j) ayant une directivité de réflexion prescrite comprend une région d'une pluralité de rainures parallèles.

5. Système de code à barres selon la revendication 2, dans lequel la barre de code (36a - 36j) ayant une directivité de réflexion prescrite se compose d'une région d'un hologramme.

6. Système de code à barres selon la revendication 2, dans lequel un au moins desdits segments (26a - 26j) réfléchit la lumière incidente dans une pluralité de directions.

7. Système de code à barres selon la revendication 1, dans lequel ledit système de code à barres (4, 14, 24, 34) est imprimé ou autrement apposé sur un support d'informations (11) et est utilisé comme moyens d'identification de l'authenticité dudit support d'informations (1).

8. Lecteur optique pour lire un système de code à barres selon l'une quelconque des revendications précédentes, comprenant
un dispositif émetteur de lumière (7) pour projeter un faisceau lumineux incident sur ledit système de code à barres (4, 14, 24, 34) ;
un dispositif récepteur de lumière (8) porté par une tête optique commune audit dispositif émetteur de lumière (7), et ayant une pluralité de surfaces de réception de lumière (8a - 8h) capables chacune de détecter individuellement la lumière réfléchie par un point dudit système de code à barres (4, 14, 24, 34) sur lequel vient frapper ladite lumière incidente ;
des moyens pour balayer ladite tête optique au-dessus d'une surface entière prescrite dudit système de code à barres ; et
un circuit de détermination (10) pour recevoir des signaux de détection desdites surfaces de réception de la lumière (8a - 8h) afin de lire des données d'une disposition géométrique desdits segments et une configuration de la lumière reçue par lesdites surfaces de réception de la lumière selon lesdites directivités de réflexion données auxdits segments dudit système de code à barres.

9. Procédé de lecture d'un système de code à barres selon l'une quelconque des revendications 1 à 7, comprenant les étapes consistant à :
projeter un faisceau lumineux incident sur ledit système de code à barres (4, 14, 24, 34) et balayer ledit faisceau lumineux sur une surface entière prescrite dudit système de code à barres de manière séquentielle ;
détecter une configuration de la lumière réfléchie par un point dudit système de code à barres sur lequel a frappé ledit faisceau lumineux incident ; et
analyser les résultats obtenus au cours de ladite étape de détection et lire les données d'une disposition géométrique desdits segments et d'une configuration de lumière résultant desdites directivités de réflexion données auxdits segments dudit système de code à barres.
